# EUROPEAN PATENT APPLICATION

(11) **EP 0 744 308 A2**
(43) Date of publication of application: **27.11.1996**
(21) Application number: 96108271.6
(22) Date of filing: 23.05.1996
(51) Int. Cl.: B60H 1/34

(54) **An adjustable air vent for the passenger compartment of a motor vehicle**

(30) Priority: 26.05.1995 IT TO950419
(71) Applicant: FIAT AUTO S.p.A., 10135 Torino (IT)
(72) Inventor: Di Giusto, Nevio, 10100 Tornio (IT)
(74) Representative: Plebani, Rinaldo

(57) **Abstract**

The air vent for the passenger compartment of a motor vehicle is fitted in an internal wall of the vehicle, in particular in a wall of the instrument panel, facing the passengers; the air vent is constituted by a hollow barrel rotatably supported with low friction on inward extensions of the dashboard, which cover it partially and retain it elastically; within the barrel there are some flat, circular discs fixed at 45° to a rotatable shaft coaxial with the barrel, which is provided with two diametrically-opposed slot-shape openings, which allow the passage of the air flow arriving from an internal duct, and intercept and even interrupt the air flow by partially or totally covering the openings by the extensions following turning of the barrel by a control wheel fixed to an end of the barrel; the turning of the shaft with the discs by a first control wheel directs the air flow into the passenger compartment in an area delimited by a 90° cone having an axis aligned with the openings in the barrel.

## Description

The present invention concerns an adjustable air vent for a motor vehicle of the type fitted to the dashboard of a motor vehicle, in a central position, or at the sides close to the front door pillars; the vents may also be disposed elsewhere in the passenger compartment of the motor vehicle, for example, at the back in correspondence with the rear seats; at the rear, that is, inside the dashboard, the air vents are connected to air ducts leading from a forced ventilation unit, for example, a fan, or an air-conditioning unit, and in parallel leading to ducts from external air intakes.

The primary function of the air vents in a motor vehicle is to direct a flow of air towards the passengers over a wide range of directions with the possibility of gradually adjusting the intensity of the flow in a way that is simple and comfortable for the passengers.

Various types of air vents are currently known and available for use in motor vehicles; one of these is constituted by a rigid grating formed by numerous vanes fixed to a frame of the grating and pivotally mounted about a horizontal or vertical axis in an opening in the motor vehicle dashboard; a separate control allows the air flow to be turned on/off by means of a valve of known type, for example, a butterfly valve; this type of air vent is functionally very limited, since the air flow can only be orientated in one plane, vertical or, alternatively, horizontal.

Another type of air vent comprises two separate arrays of vanes, intersecting each other at 90°; the vanes of the first array are fixed to a frame which may be oriented, for example, to direct the flow of air in a vertical plane, while the vanes of the second array may be oriented individually to direct the air flow in a horizontal plane; this air vent has a greater range of orientation than the air vent described above but, due to the many intersecting vanes, it is very noisy, especially at high vehicle speeds when air is forced violently into the passenger compartment.

Another type of air vent is known, which is particularly widespread in buses, or generally in large vehicles used for transporting people, comprising a spherical body, normally of plastics material, fitted rotatably with low friction in a corresponding support cavity, and provided with a diametral channel for the passage of air through the spherical body, which can be oriented in various directions by inserting a finger into the air passage; the air flow is interrupted by moving the sphere into a predetermined position in which the diametral passage is blocked by its own support.

This type of air vent also has disadvantages, in that the sphere is easily blocked by dust, or solid particles which become trapped between the sphere and the support, but especially as it is not possible to adjust the strength of the stream of air from each vent independently.

A primary object of the present invention is to overcome the disadvantages described above with respect to known air vents.

A further object of the invention is to provide an air vent for a motor vehicle which is able to direct the air stream in an adjustable manner into a large volume, and gradually to limit its strength.

A further object of the invention is to provide an air vent for a motor vehicle which is of simple construction and is easy to operate.

According to the present invention, therefore, there is provided an adjustable air vent for a motor vehicle, which can orientate and limit a flow of air directed into the motor vehicle, and includes movable interception means for limiting the air flow, and deflector means for orienting the air flow, characterised in that the interception means include a hollow body which is rotatable about an axis and provided with openings for the air flow to pass through the hollow body, and in that the deflector means include a plurality of discs disposed within the hollow body and fixed to a rotatable shaft at a predetermined angle to the axis thereof, the discs being orientable to direct the flow of air passing through the hollow body; the said hollow body being delimited by a thin barrel-shape shell having a circular cross-section concentric with the said axis.

This and other characteristics of the invention will become clear from the following description of a preferred embodiment, given by way of non-limitative example, with reference to the accompanying drawings, in which:
Figure 1 is a perspective view of the air vent according to the invention;
Figure 2 is a vertical longitudinal section of the air vent of Figure 1; and
Figure 3 is a cross-section of the air vent taken on the line III-III of Figure 2.

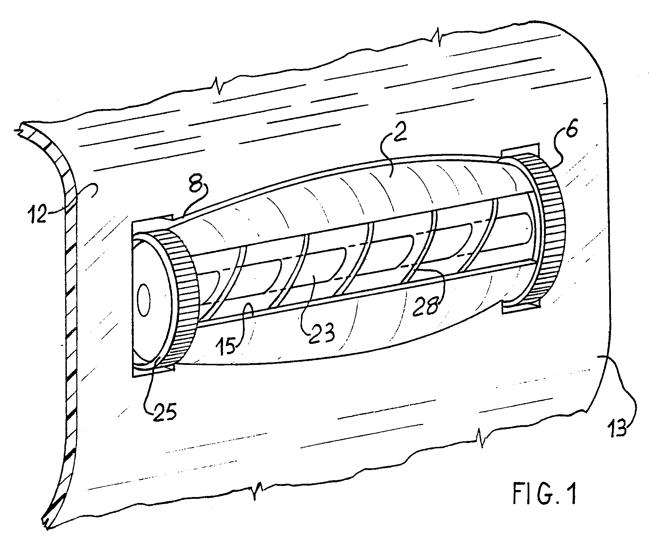

With reference to Figures 1, 2 and 3, the air vent 1 according to the invention is intended to be fitted in a wall of the dashboard, facing into the vehicle and includes a hollow body, or barrel 2, constituted by a thin, substantially barrel-shape shell 3 of plastics material which is elongate with a circular cross-section concentric with a longitudinal axis of rotation "A"; the barrel 2 is closed at its ends by two flat, opposite walls 4 and 5 integral with the shell 3; along one of the two walls, for example, the wall 5, the barrel 2 extends to form a cylindrical control wheel 6 which is concentric and integral with the barrel 2; the wheel 6 has a knurled outer surface 7 adapted to be turned together with the barrel, by means of the fingertips.

The air vent is fitted in a suitable opening 8 in the dashboard with the axis "A" substantially horizontal, and in such a way that the barrel 2 projects from the dashboard to a sufficient extent to allow the control wheel 6 to be operated.

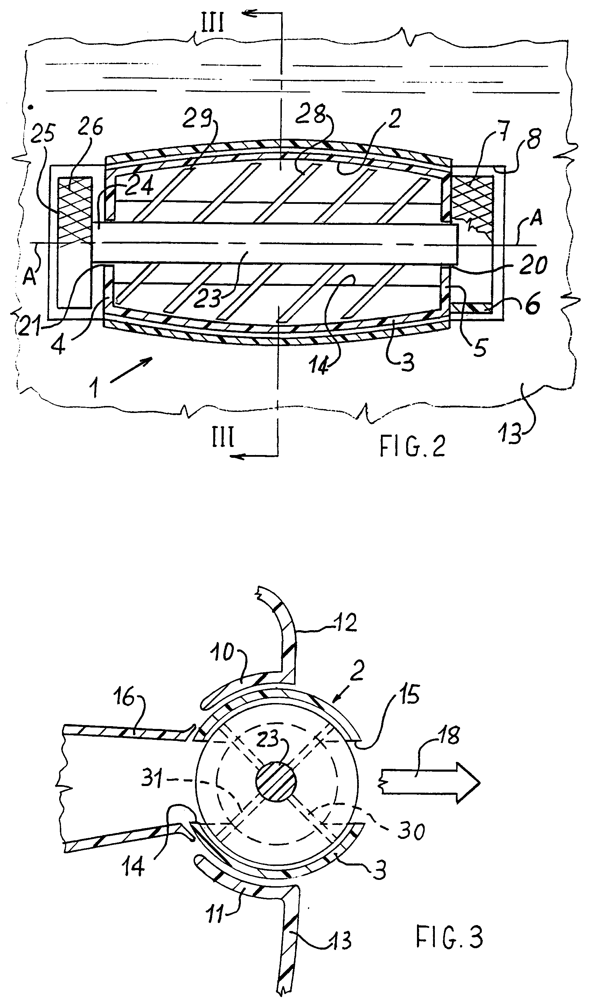

The barrel 2 is held so that it can turn about the axis "A" by two wall portions 10 and 11 forming an integral part of the front wall 12 of the vehicle dashboard 13; the two portions 10 and 11 extend from the side opposite the front wall 12 and are shaped so as partially to surround the barrel 2 and hold it elastically in the operative position of Figure 2; the shell 3 is provided with two diametrically opposite, longitudinal slot-shape openings 14 and 15; an air supply duct 16, for example from a frontal air intake of the vehicle, terminates at the shell 3 of the barrel 2 with the interposition of a lip seal 17 to ensure it is air-tight; therefore, when the slots 14, 15 are aligned with the duct 16, the air flow can pass through the barrel 2 and exit from the part facing the interior of the passenger compartment as indicated with arrow 18 in Figure 3.

In particular, the two wall positions 10 and 11 surround the shell 3 to an extent at least equal to the circumferential width of the slots 14 and 15 and, therefore, if the barrel 2 is turned using the knurled wheel 6, the slot 14, facing the duct 16, is first partly covered by one of the walls 10 or 11 and, as the barrel continues to turn, the slot 14 is completely closed, interrupting the flow of air.

The two end walls 4 and 5 of the barrel 2 are provided with holes 20 and 21 coaxial with the axis "A", within which a shaft 23 is able to turn with low friction, but is not able to translate; the end 24 of the shaft 23 projects through the wall 4 out of the barrel 2, and is joined, or is integral with, a cylindrical wheel 25 similar to the wheel 6, concentric with the barrel 2 and having a knurled outer surface 26 adapted to be turned by the fingertips.

A plurality of flat, circular discs 28 is mounted on the shaft 23 within the barrel 2; the discs 28 are fixed rigidly and concentrically to the shaft 23 and are inclined at an angle of 45° to the axis "A"; the discs 28 are parallel to each other and their diameters are such that their outer edges 29 touch the inner wall of the shell 3; if the shaft 23 is turned by the knurled ring 25, the flow of air entering the passenger compartment can, by virtue of the 45° angle of inclination of the discs 28, be directed into an area represented by a 90° cone whose axis is aligned with the slots 14 and 15; in fact, Figure 2, in which the two slots 14 and 15 are aligned horizontally with the duct 16, and the discs are inclined as illustrated, shows that the air flow is not diverted and proceeds horizontally; if the discs 28 are turned through 45° by the knurled wheel 25, they assume, depending on the sense of rotation, a position inclined at 45° downwards (position 30 in Figure 3), or upwards (position 31 in Figure 3) with respect to the direction of the air flow. By turning the shaft 23 to intermediate angular positions, the air flow can be directed anywhere within the aforesaid cone, independently of the position to which the barrel 2 has been turned in one sense or in the opposite sense, to limit the strength of the air flow.

From the foregoing, it is easily seen that the advantages of the device according to the invention include great constructional simplicity, ease of mounting the barrel in its seat, simplicity of use in that turning the two wheels 6 and 25 independently allows the direction and strength of the air flow to be chosen; finally, as a consequence, the costs of manufacturing and fitting the barrel 2 in the dashboard of a vehicle are also minimised.

## Claims

1. An adjustable air vent for a motor vehicle, suitable to orientate and limit an air flow directed into the said motor vehicle, including movable interception means (2; 3) operable to limit the said air flow, and deflector means (23; 28) operable to direct the said air flow, characterised in that the said interception means include a hollow body (2) rotatable about an axis (A) and provided with openings (14; 15) for the said flow of air to pass through the said hollow body (2), and in that the said deflector means include a plurality of discs (28) disposed within the said hollow body (2) and fixed on a rotatable shaft (23) at a predetermined inclination with respect to the said axis (A), the said discs (28) being orientable to direct the said air flow passing through the said hollow body; the said hollow body (2) being defined by a thin barrel-shape shell (3) having a circular cross-section concentric with the said axis (A).

2. An air vent according to Claim 1, characterised in that the said hollow body is fitted in a wall (12) of a part (13) of the said vehicle and held elastically so that it is able to turn with low friction between two portions (10; 11) of the said wall which partially surround the said hollow body.

3. An air vent according to Claim 2, characterised in that the said wall portions (10; 11) extend around the said hollow body over an angular extent such as to cover one of the said openings in at least one angular position of the said hollow body.

4. An air vent according to any preceding claim, characterised in that the said openings (14; 15) extend longitudinally and are positioned on diametrically opposite parts of the said hollow body.

5. An air vent according to any preceding claim, characterised in that the said shaft (23) is rotatable with low friction on two opposite end walls (4; 5) of the said hollow body and in that a first control wheel (25) is mounted on one end of the said shaft (23) outside one of the said walls (4) to allow the said discs (28) to be turned manually so as to vary the direction of the said air flow.

6. An air vent according to any preceding claim, characterised in that a second control wheel (6) is firmly fixed to an end of the said hollow body (2) opposite the said first wheel (25), to allow the said hollow body to be turned manually so as to limit the said air flow.
